(19) **Europäisches Patentamt**
**European Patent Office**
**Office européen des brevets**

(11) **EP 3 472 906 B1**

(12) **EUROPEAN PATENT SPECIFICATION**

(45) Date of publication and mention
of the grant of the patent:
**25.11.2020 Bulletin 2020/48**

(21) Application number: **16906346.8**

(22) Date of filing: **21.06.2016**

(51) Int Cl.:
**H02J 3/01** (2006.01)      **H02M 7/48** (2007.01)

(86) International application number:
**PCT/JP2016/069365**

(87) International publication number:
**WO 2017/221430 (28.12.2017 Gazette 2017/52)**

(54) **IDENTIFICATION METHOD FOR IDENTIFYING A RESONANCE OF A POWER GRID, AND GRID-CONNECTED UNIT**

IDENTIFIZIERUNGSVERFAHREN ZUR IDENTIFIZIERUNG EINES RESONANZ EINES STROMNETZES UND NETZGEKOPPELTE EINHEIT

PROCÉDÉ D'IDENTIFICATION PERMETTANT D'IDENTIFIER UNE RÉSONANCE D'UN RÉSEAU ÉLECTRIQUE, ET UNITÉ CONNECTÉE AU RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.04.2019 Bulletin 2019/17**

(73) Proprietor: **Hitachi, Ltd.**
**Tokyo 100-8280 (JP)**

(72) Inventors:
• **LEE, Chia-Tse**
**Tokyo 100-8280 (JP)**

• **KIKUCHI, Akira**
**Tokyo 100-8280 (JP)**
• **OOHARA, Shinya**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**WO-A1-2014/125649      DE-A1-102014 200 740**
**JP-A- 2001 086 646**

## Description

### Technical field

0001 The invention relates to identification method for identifying a resonance of a power grid, particularly to detecting the occurrence of resonance and its frequency for stabilizing the operation in grid-connected units.

### Background Art

0002 Resonance at the Point of Common Coupling on the power grid has to be within the limits specified e.g. by a grid code regulation. This resonance occurs as different frequency waveforms on the top of fundamental frequency voltage and current, which is 50 Hz or 60Hz. The resonance on the grid is caused by variations of power grid impedance due to changes of power grid network configurations, switching of grid-connected elements such as load, capacitors, reactor banks and generators of power producing units connected to the grid.

0003 Use of resonance damping control in the grid-connected units for suppressing undesired resonances is possible. However, the power grid impedance becomes more changeable and unpredictable as larger scale renewable energies are installed at the power grid. This uncertainty makes original control parameters (coefficients used in controller) of resonance damping control in the grid-connected units unsuitable, and the resonance problem still occurs.

0004 Since the power grid resonance is a problem, there is a need for a method for identifying occurrence of power grid resonance and estimating control parameters for the resonance damping control of the grid-connected unit, which suppresses the resonance against the impedance changes on power grid.

0005 It would be advantageous to achieve improvements in the identification method of power grid resonances. In method of the prior art disclosed by Patent Literature 1 (WO2014/202077A1), the identification of the power grid resonance is accomplished by Fourier Transform (FT), and the control parameters for the damping control of the grid-connected unit are estimated and updated after the calculation of FT.

Document DE 102014200740 A1 discloses a method according to the preamble of claim 1.

### Citation List

### Patent Literature

0006 Patent Literature 1: WO2014/202077A1

### Summary of Invention

### Technical Problem

0007 However, it takes longer time to estimate and update the control parameters. During this delay time, the unsuppressed resonance could become high so that the grid-connected units need to be disconnected from the power grid.

0008 Accordingly, it is an object of the present invention to provide an identification method and a grid-connected unit for identifying a resonance of a power grid within a shorter delay time.

### Solution to Problem

0009 According to the present invention, a method according to claim 1, and a unit according to claim 9 are provided. In order to solve the above mentioned problem, an identification method for identifying a resonance of a power grid where a grid-connected unit is connected, the method includes, measuring an electrical quantity at a point of common coupling, calculating an envelope of a waveform of the electrical quantity, and detecting an occurrence of the resonance based on the envelope.

0010 Moreover, in order to solve the above mentioned problem, a grid-connected unit connected to a power grid comprises a power converter having a switching device; a detecting unit measuring an electrical quantity at a point of common coupling; a controller controlling the power converter with turn-on and turn-off of the switching device on the basis of the electrical quantity, wherein the controller detects an occurrence of the resonance based on an envelope of the electrical quantity and then the controller performs a damping control to the power converter so that the resonance is damped.

### Advantageous Effects of Invention

0011 The identification method and grid-connected unit according to the present invention result that a resonance of a power grid is identified within a shorter delay time with detecting the resonance based on the envelope.

0012 Other objects, features and advantages of the invention will appear from the following description with the accompanying drawings.

### Brief description of Drawings

0013

Fig. 1 shows a grid-connected unit connected to a power grid.
Fig. 2 shows an implementation of the grid-connected unit.
Fig. 3 illustrates a functional block diagram of the controller.

Fig. 4 shows a configuration of an identification method for power grid resonance.

Fig. 5 shows corresponding waveforms in an identification method for power grid resonance.

Fig. 6 shows the various specified time interval.

Description of Embodiments

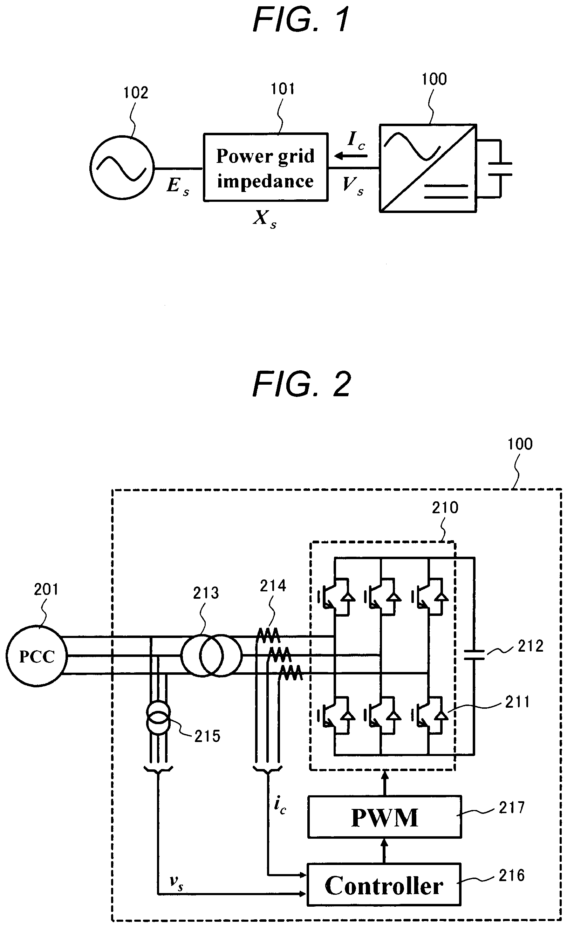

0014 Fig. 1 shows a grid-connected unit [100] connected to a power grid [102] through a power grid impedance [101]. This grid-connected unit [100] is mainly composed of a DC-to-AC converter (inverter), and it is core component for applications as a static synchronous compensator (STATCOM), a power conditioning system (PCS) for a photovoltaic (PV) and a wind farm (WF), and other grid-connected applications. The power grid impedance [101] typically behaves as an inductance at fundamental frequency because of power transmission/distribution network. However, in the power transmission/distribution network, factors as network configurations and other grid-connected elements in the network also affect the behaviors of this power grid impedance [101].

0015 Fig. 2 shows an implementation of the grid-connected unit [100], which includes a power converter [210], which is composed of semiconductor power switching devices such as insulated gate bipolar transistors (IGBTs) [211], a DC capacitor [212], an isolation transformer [213], a current transformer (CT) [214], a voltage transformer (VT) [215], a controller [216], and a Pulse-Width Modulation (PWM) modulator [217]. The point that this grid-connected unit connects is referred to as Point of Common Coupling (PCC) [201] hereafter. The CT [214] detects a current (phase current) $i_c$ on the AC side of the power converter 210. The VT [215] detects a voltage $v_s$ at PCC [201].

0016 In Fig. 2, the grid-connected unit [100] accomplishes the DC-to-AC power conversions by operating the power converter [210] with different combinations of turn-on and turn-off states of IGBTs [211], therefore creating a chopping waveform from voltage of a DC capacitor [212] with a typical chopping frequency of a few kHz. A sinusoidal waveform can be derived at the side of PCC [201] because a frequency component at the chopping frequency is filtered out by effects of the isolation transformer [213]. These turn-on and turn-off states are determined by the PWM modulator [217] with the signal generated by the controller [216].

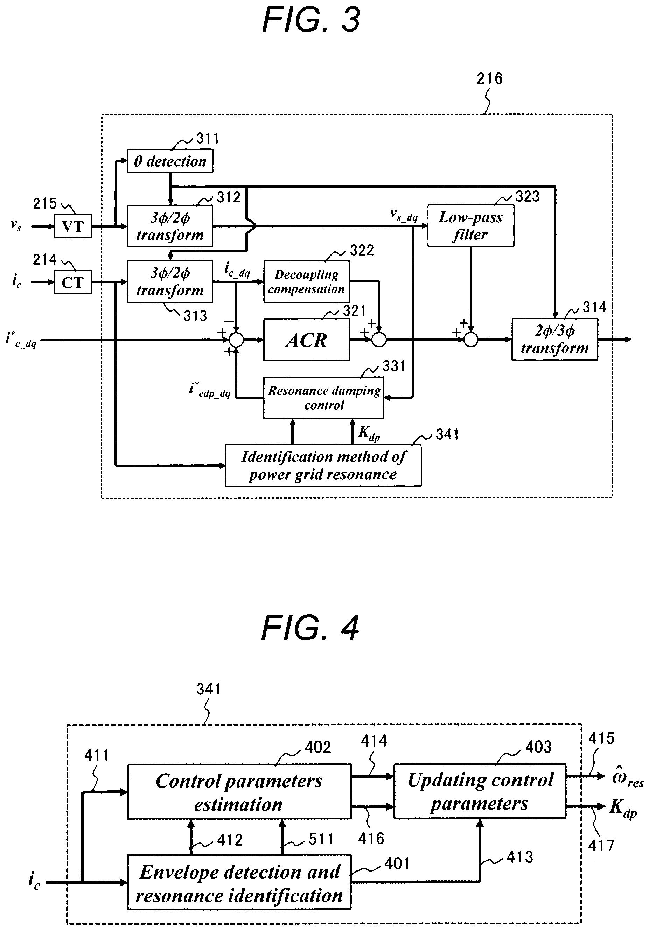

0017 Fig. 3 illustrates a functional block diagram of the controller [216] principle for controlling the grid-connected unit [100] in terms of the current reference $i^*_{c\_dq}$ corresponding to the desired amount of current injected into the PCC [201]. The current reference $i^*_{c\_dq}$ is output from the other controller. The current $i_c$ and the voltage $v_s$ are measured by the CT [214] and VT [215] respectively, and these information are processed with Automatic Current Regulator (ACR) [321] to realize the current regulation. Additionally, the functions shown by the blocks in Fig.3 are brought by a processing unit such as a micro-computer performing a computer program.

0018 The ACR [321] performs current regulation with proportional and integral (PI) controller, which provides zero steady-state error at DC component. However, parameters such as voltage and current in a 3-phase system are time-varying with fundamental frequency, i.e. the frequency of the power grid. In order to obtain better current regulation, the parameters in the 3-phase system are transformed into parameters in a 2-phase system, where the values are represented in a reference frame rotating with the frequency of the power grid. Therefore, $\theta$ detection [311] detects the phase angle of the rotating reference frame for transformations [312-314], and the measured voltage $v_s$ and current $i_c$ are transformed into the values $v_{s\_dq}$ and $i_{c\_dq}$ in the rotating reference frame.

0019 Additionally, a "vector control" using d-q axis is applied to the controller [216] in the embodiment. Therefore, in Fig.3, each of the currents ($i^*_{c\_dq}$, $i_{c\_dq}$, $i^*_{cdp\_dq}$) and voltage ($v_{s\_dq}$) represented by symbols with subscript "dq" has a d-axis component and a q-axis component.

0020 The difference between the current reference $i^*_{c\_dq}$ and the measured current $i_{c\_dq}$ is supplied to the ACR controller [321], and the decoupling compensation [322] calculates values of coupling effects, which is caused by the 3-phase to 2-phase transformation, in the 2-phase system of the rotating reference frame for decoupling control between the d-axis component and the q-axis component. In addition, the measured voltage $v_{s\_dq}$ is processed by a low-pass filter [323] to avoid voltage distortion of this feed-forward voltage affecting performance of the current regulation. The output of ACR [321], the decoupling compensation [322], and the low-pass filter [323] are added to generate the voltage reference in the 2-phase system. This 2-phase voltage reference (d-axis, q-axis) is performed with 2-phase to 3-phase transformation [314] to derive the 3-phase voltage reference for PWM modulator [217] in Fig. 2.

0021 In Fig. 1, power grid impedance [101] is affected by many factors as power grid network configurations and grid-connected elements such as load, capacitors, reactor banks and generators. These effects could result in resonance problem at the PCC [201]. Once this resonance occurs, different frequency waveforms appear on the fundamental frequency voltage and current. Consequently, the voltage and current of the grid-connected units are distorted.

0022 Resonance at the PCC [201] should be suppressed within the limits specified e.g. by a "grid code regulation". Typically the use of resonance damping control for suppressing undesired resonances is possible. In Fig. 3, a resonance damping control [331] uses the measured voltage $v_{s\_dq}$ which is processed by a filter having a transfer function shown in [MATH1], to derive a resonance damping reference $i^*_{cdp\_dq}$. Herein $K_{dp}$ and $\hat{\omega}_{res}$

are control parameters of resonance damping control [331]. $K_{dp}$ and $\hat{\omega}_{res}$ are given by an identification method of power grid resonance [341] mentioned later. It is noted that the resonance damping control 331 can be implemented in other ways.

0023

$$[\text{MATH 1}] \qquad K_{dp}\frac{s^2}{s^2+2\hat{\omega}_{res}s+\hat{\omega}_{res}^2}$$

0024 However, the power grid impedance [101] becomes more changeable and unpredictable as larger scale renewable energies are installed at the power grid. This uncertainty makes original control parameters in resonance damping control [331] unsuitable, and the resonance problem may still occur. In this situation, if the resonance damping control [331] does not respond to the resonance quickly, the unsuppressed resonance could become high so that the grid-connected unit 100 need to be disconnected from the power grid [102].

0025 For this purpose, the identification method of power grid resonance [341] is implemented to provide a fast identification for the resonance and it updates the estimated control parameters $\hat{\omega}_{res}$ and $K_{dp}$ to the resonance damping control [331] quickly. Therefore, the grid-connected unit [100] can stabilize the voltage and current at PCC [201] against the resonance caused by uncertainty in the power grid impedance [101].

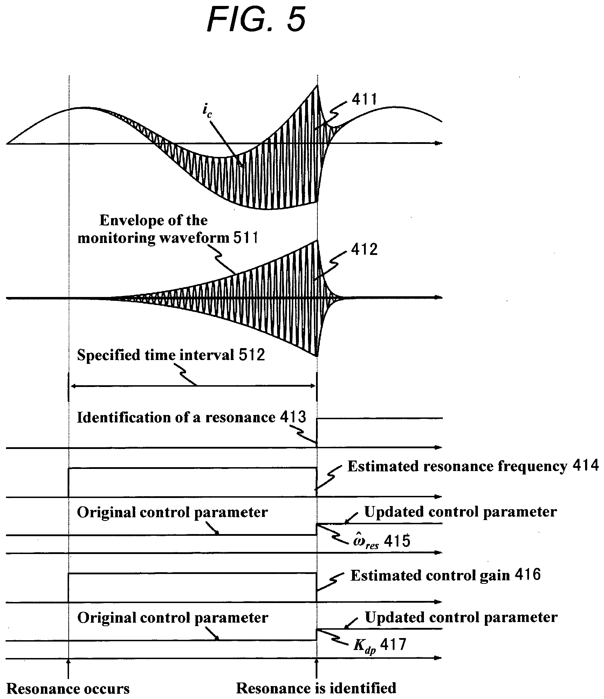

0026 Fig. 4 shows a configuration of an identification method for power grid resonance [341]. The block of envelope detection and resonance identification [401] identifies the occurrence of the resonance by analyzing envelope of the measured current $i_c$ [411], and on the basis of the analyzed results (waveforms [412], [511] in Fig. 5), control parameters estimation [402] estimates control parameters including resonance frequency [414] and control gain [416]. The block of updating control parameters [403] take charge of updating control parameters ($\hat{\omega}_{res}$ [415], $K_{dp}$ [417]) to the resonance damping control [331].

0027 Fig. 5 shows corresponding waveforms in an identification method for power grid resonance [341]. The measured current $i_c$ [411] operates at the fundamental frequency, which is 50Hz or 60Hz before the resonance occurs. Once the resonance occurs, a different frequency waveform occurs on the top of fundamental frequency current. Namely, the waveform having a resonance frequency higher than the fundamental frequency is superimposed to the fundamental frequency current waveform. The block [401] (Fig. 4) takes off the fundamental component from the measure current $i_c$ [411] and obtains waveform [412], and then this block [401] also generates envelope waveform [511] based on the waveform [412], and the method monitors variation of this envelope [511] during a specified time interval [512]. Consequently, the block [401] detects the resonance as the variation of the envelope waveform [511] continues increasing during the specified time interval [512], and then changes identification status of resonance [413] (cf. Fig. 4).

0028 The envelope [511] is calculated with a well-known means as follows. The measured current $i_c$ [411] is squared and then a square root of the squared $i_c$ is calculated. A high frequency (resonance frequency) component of the square root is eliminated with a LPF (Low Pass Filter).

0029 On the basis of analyzed result, the block of control parameters estimation [402] (Fig. 4) estimates the resonance frequency $\hat{\omega}_{res}$ [414] and the control gain $K_{dp}$ [416] by using the waveforms [412] and [511]. For example, the resonance frequency is estimated on the basis of the frequency of waveform [412], and the control gain is estimated on the basis of the amplitude of waveform [412] or [511].

0030 The resonance frequency is estimated with means as follows. Zero-crossing points in the waveform [412] in Fig.5 are detected. Then, time intervals between any two adjacent zero-crossing points are calculated. One time interval corresponds to a half cycle of oscillating waveform [412]. Consequently, the resonance frequency is estimated with using the calculated time intervals.

0031 As the resonance is identified, the updated resonance frequency [415] and the updated control gain [417] are updated by the estimated resonance frequency [414] and the estimated control gain [416] to replace original control parameters. After the update of control parameters, the resonance is suppressed by the resonance damping control [331] (Fig. 3) with the quickly updated control parameters [415] and [417].

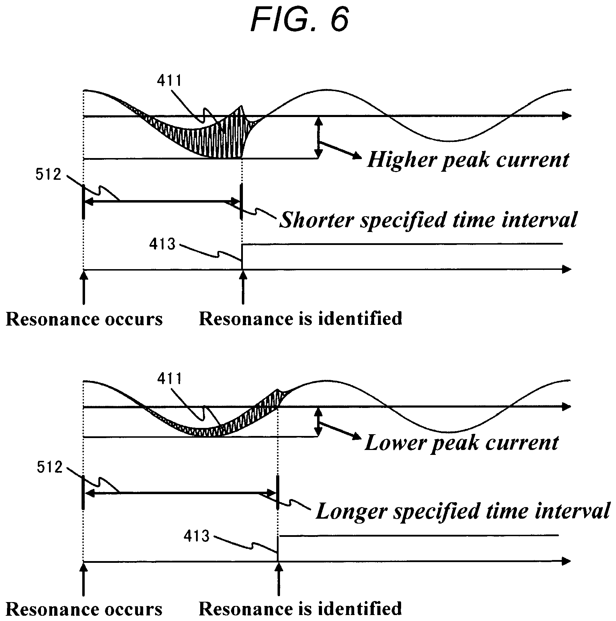

0032 The time interval [512] in Fig.5 is specified by a constant, while the time interval could be specified according to the corresponding values of measured current $i_c$ [411] for an accurate detection of the occurrence of resonance. Fig. 6 shows the various specified time interval [512]. For example, the peak value of measured current $i_c$ [411] could be applied to specify the time interval [512]. As the peak value is high (upper waveform in Fig. 6), the specified time interval [512] decreases, therefore identification time of the resonance is shorter. On the other hand, if the peak value is low (lower waveform in Fig. 6), the specified time interval [512] increases, and then identification time of the resonance is longer.

0033 With the above-mentioned embodiments, the resonance of the power grid is identified within a shorter delay time. Additionally, the occurrence of the resonance is detected with a shorter time, and the control parameters are updated with a shorter time. Therefore, the grid-connected unit responses to the change of the power grid impedance quickly and it avoids the disconnection of grid-connected unit caused by the resonance.

0034 While the invention has been illustrated and described in detailed in the drawings and description, such illustration and description are to be considered illustrative or exemplary and not restrictive; the invention is not limited to the disclosed embodiments. Other variations to the disclosed embodiments can be understood by those skilled in the art in practicing the claimed invention, from a study of the drawings, the disclosure, and the appended claims.

0035 For example, a MOSFET (Metal Oxide Semiconductor Field Effect Transistor) and a GTO (Gate Turn-Off Thyristor) are applied to the power converter [210] in Fig. 2 instead of the IGBT. Additionally, the resonance frequency and the control gain can be estimated on the basis of other measured electrical quantity such as the measured voltage $v_s$ instead of the measured current $i_c$.

Reference Signs List

0036

| | |
|---|---|
| 100 | Grid-connected unit |
| 101 | Power grid impedance |
| 102 | Power grid |
| 201 | Point of common coupling |
| 210 | Power converter |
| 211 | IGBT |
| 212 | DC capacitor |
| 213 | Isolation transformer |
| 214 | Current transformer |
| 215 | Voltage transformer |
| 216 | Controller |
| 217 | Pulse-width modulation modulator |
| 411 | Measured current |
| 412 | Waveform |
| 512 | Specified time interval |

**Claims**

1. An identification method for identifying a resonance of a power grid where a grid-connected unit is connected, the method includes, measuring an electrical quantity at a point of common coupling, calculating an envelope of a waveform of the electrical quantity, detecting an occurrence of the resonance based on the envelope, **characterized in that** the envelope is calculated based on a waveform superimposed to a fundamental component of the electrical quantity, wherein the superimposed waveform is calculated by taking off the fundamental component of the electrical quantity from the electrical quantity.

2. An identification method according to claim 1, wherein the electrical quantity is a current at the point of common coupling.

3. An identification method according to claim 1, wherein the grid-connected unit has a power converter comprising a switching device.

4. An identification method according to claim 1 further including: estimating a parameter for damping control of the grid-connects unit on the basis of the waveform superimposed to the fundamental component of the electrical quantity.

5. An identification method according to claim 4, wherein an information set in the grid-connected unit for damping control is updated on the basis of the estimated parameter.

6. An identification method according to claim 4, wherein the parameter is a resonance frequency and a gain.

7. An identification method according to claim 1, wherein the electrical quantity is measured during a time interval.

8. An identification method according to claim 7, wherein the time interval is specified by a constant or according to a value of the measured electrical quantity.

9. A grid-connected unit connected to a power grid comprising:

   a power converter having a switching device;
   a detecting unit measuring an electrical quantity at a point of common coupling;
   a controller controlling the power converter with turn-on and turn-off of the switching device on the basis of the electrical quantity;
   wherein the controller detects an occurrence of the resonance based on an envelope of the electrical quantity and then performs a damping control to the power converter so that the resonance is damped,
   **characterized in that** the controller calculates the envelope based on a waveform superimposed to a fundamental component of the electrical quantity, wherein the superimposed waveform is calculated by taking off the fundamental component of the electrical quantity from the electrical quantity.

10. A grid-connected unit according to claim 9, wherein information including a parameter for the damping control is set in the controller.

11. A grid-connected unit according to claim 10, wherein the controller estimates the parameter on the basis of the waveform superimposed to the fundamental component of the electrical quantity, and wherein the controller updates the information on the basis of the parameter.

12. A grid-connected unit according to claim 9, wherein the electrical quantity is measured during a time interval.

13. A grid-connected unit according to claim 11, wherein the time interval is specified by a constant or according to a value of the measured electrical quantity.


**Patentansprüche**

1. Identifizierungsverfahren zum Identifizieren einer Resonanz eines Energieversorgungsnetzes, mit dem eine netzgekoppelte Einheit verbunden ist, wobei das Verfahren Folgendes umfasst:

   Messen einer elektrischen Größe an einem Übergabepunkt,
   Berechnen einer Hüllkurve einer Wellenform der elektrischen Größe,
   Detektieren eines Auftretens der Resonanz auf der Grundlage der Hüllkurve,
   **dadurch gekennzeichnet, dass**
   die Hüllkurve auf der Grundlage einer Wellenform berechnet wird, die einer Grundkomponente der elektrischen Größe überlagert ist, wobei die überlagerte Wellenform berechnet wird, indem die Grundkomponente der elektrischen Größe aus der elektrischen Größe entfernt wird.

2. Identifizierungsverfahren nach Anspruch 1, wobei die elektrische Größe ein Strom am Übergabepunkt ist.

3. Identifizierungsverfahren nach Anspruch 1, wobei die netzgekoppelte Einheit einen Leistungsumsetzer aufweist, der eine Schaltvorrichtung umfasst.

4. Identifizierungsverfahren nach Anspruch 1, das ferner Folgendes enthält:
   Schätzen eines Parameters zur Dämpfungssteuerung der netzgekoppelten Einheit auf der Grundlage der Wellenform, die der Grundkomponente der elektrischen Größe überlagert ist.

5. Identifizierungsverfahren nach Anspruch 4, wobei Informationen, die in der netzgekoppelten Einheit zur Dämpfungssteuerung eingestellt sind, auf der Grundlage des geschätzten Parameters aktualisiert werden.

6. Identifizierungsverfahren nach Anspruch 4, wobei der Parameter eine Resonanzfrequenz und ein Gewinn ist.

7. Identifizierungsverfahren nach Anspruch 1, wobei die elektrische Größe während eines Zeitintervalls gemessen wird.

8. Identifizierungsverfahren nach Anspruch 7, wobei das Zeitintervall durch eine Konstante oder gemäß einem Wert der gemessenen elektrischen Größe spezifiziert wird.

9. Netzgekoppelte Einheit, die mit einem Energieversorgungsnetz verbunden ist, die Folgendes umfasst:

   einen Leistungsumsetzer, der eine Schaltvorrichtung aufweist;
   eine Detektionseinheit, die eine elektrische Größe an einem Übergabepunkt misst;
   eine Steuereinrichtung, die den Leistungsumsetzer bezüglich des Einschaltens und Ausschaltens der Schaltvorrichtung auf der Grundlage der elektrischen Größe steuert;
   wobei die Steuereinrichtung ein Auftreten von Resonanz auf der Grundlage einer Hüllkurve der elektrischen Größe detektiert und daraufhin eine Dämpfungssteuerung am Leistungsumsetzer durchführt, derart, dass die Resonanz gedämpft wird,
   **dadurch gekennzeichnet, dass**
   die Steuereinrichtung die Hüllkurve auf der Grundlage einer Wellenform berechnet, die einer Grundkomponente der elektrischen Größe überlagert ist, wobei die überlagerte Wellenform berechnet wird, indem die Grundkomponente der elektrischen Größe aus der elektrischen Größe entfernt wird.

10. Netzgekoppelte Einheit nach Anspruch 9, wobei Informationen, die einen Parameter zur Dämpfungssteuerung enthalten, in der Steuereinrichtung eingestellt werden.

11. Netzgekoppelte Einheit nach Anspruch 10, wobei die Steuereinrichtung den Parameter auf der Grundlage der Wellenform schätzt, die der Grundkomponente der elektrischen Größe überlagert ist, und wobei die Steuereinrichtung die Informationen auf der Grundlage des Parameters aktualisiert.

12. Netzgekoppelte Einheit nach Anspruch 9, wobei die elektrische Größe während eines Zeitintervalls gemessen wird.

13. Netzgekoppelte Einheit nach Anspruch 11, wobei das Zeitintervall durch eine Konstante oder gemäß einem Wert der gemessenen elektrischen Größe spezifiziert wird.

## Revendications

1. Procédé d'identification destiné à identifier une résonance d'un réseau de puissance dans lequel une unité connectée au réseau est connectée, le procédé incluant les étapes consistant à :

   mesurer une quantité électrique à un point de couplage commun,
   calculer une enveloppe d'une forme d'onde de la quantité électrique,
   détecter une occurrence de la résonance sur la base de l'enveloppe,
   **caractérisé en ce que**
   l'enveloppe est calculée sur la base d'une forme d'onde superposée à une composante fondamentale de la quantité électrique, et dans lequel la forme d'onde superposée est calculée en retranchant la composante fondamentale de la quantité électrique depuis la quantité électrique.

2. Procédé d'identification selon la revendication 1, dans lequel la quantité électrique est un courant au point de couplage commun.

3. Procédé d'identification selon la revendication 1, dans lequel l'unité connectée au réseau a un convertisseur de puissance comprenant un dispositif de commutation.

4. Procédé d'identification selon la revendication 1, comprenant en outre l'étape consistant à :
   estimer un paramètre pour atténuer une commande de l'unité connectée au réseau sur la base de la forme d'onde superposée à la composante fondamentale de la quantité électrique.

5. Procédé d'identification selon la revendication 4, dans lequel une information établie dans l'unité connectée au réseau destinée à atténuer une commande est mise à jour sur la base du paramètre estimé.

6. Procédé d'identification selon la revendication 4, dans lequel le paramètre est une fréquence de résonance et un gain.

7. Procédé d'identification selon la revendication 1, dans lequel la quantité électrique est mesurée pendant un intervalle de temps.

8. Procédé d'identification selon la revendication 7, dans lequel l'intervalle de temps est spécifié par une constante ou en accord avec une valeur de la quantité électrique mesurée.

9. Unité connectée au réseau connectée à un réseau de puissance comprenant :

   un convertisseur de puissance ayant un dispositif de commutation ;
   une unité de détection mesurant une quantité électrique à un point de couplage commun ;
   un contrôleur commandant le convertisseur de puissance avec une activation et une désactivation du dispositif de commutation sur la base de la quantité électrique ;
   dans laquelle le contrôleur détecte une occurrence de la résonance sur la base d'une enveloppe de la quantité électrique, et puis exécute une commande d'atténuation sur le convertisseur de puissance de manière à atténuer la résonance,
   **caractérisée en ce que**
   le contrôleur calcule l'enveloppe sur la base d'une forme d'onde superposée à une composante fondamentale de la quantité électrique, dans laquelle la forme d'onde superposée est calculée en retranchant la composante fondamentale de la quantité électrique depuis la quantité électrique.

10. Unité connectée au réseau selon la revendication 9, dans laquelle une information incluant un paramètre pour la commande d'atténuation est établie dans le contrôleur.

11. Unité connectée au réseau selon la revendication 10,
    dans laquelle le contrôleur estime le paramètre sur la base de la forme d'onde superposée à la composante fondamentale de la quantité électrique, et dans laquelle le contrôleur met à jour l'information sur la base du paramètre.

12. Unité connectée au réseau selon la revendication 9, dans laquelle la quantité électrique est mesurée pendant un intervalle de temps.

13. Unité connectée au réseau selon la revendication 11, dans laquelle l'intervalle temporel est spécifié par une constante ou en accord avec une valeur de la quantité électrique mesurée.

# FIG. 1

# FIG. 2

# FIG. 3

# FIG. 4

# FIG. 5

411

$i_c$

412

Envelope of the
monitoring waveform 511

Specified time interval 512

Identification of a resonance 413

Estimated resonance frequency 414

Original control parameter          Updated control parameter

$\hat{\omega}_{res}$ 415

Estimated control gain 416

Original control parameter          Updated control parameter

$K_{dp}$ 417

Resonance occurs          Resonance is identified

## FIG. 6

Higher peak current

Shorter specified time interval

Resonance occurs    Resonance is identified

Lower peak current

Longer specified time interval

Resonance occurs    Resonance is identified

**EP 3 472 906 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014202077 A1

- DE 102014200740 A1